Europäisches Patentamt

European Patent Office

Office européen des brevets

(19)

(11) Veröffentlichungsnummer: **0 215 225**
**A2**

(12) # EUROPÄISCHE PATENTANMELDUNG

(21) Anmeldenummer: 86109518.0

(51) Int. Cl.⁴: **A01N 25/18** , A01N 25/34

(22) Anmeldetag: 11.07.86

(30) Priorität: 06.09.85 DE 3531795

(43) Veröffentlichungstag der Anmeldung:
**25.03.87 Patentblatt 87/13**

(84) Benannte Vertragsstaaten:
**AT BE CH DE FR GB IT LI LU NL SE**

(71) Anmelder: **CELAMERCK GmbH & Co. KG**
**Binger Strasse 173**
**D-6507 Ingelheim am Rhein(DE)**

(72) Erfinder: **Kauth, Hans-Herbert, Dr.**
**Gehauweg 14**
**D-6507 Ingelheim am Rhein(DE)**
Erfinder: **Itzel, Hans-Helmut, Dr.**
**Im Herzenacker 51**
**D-6535 Gau-Algesheim(DE)**

(54) **Mottenschutzmittel und Verfahren zu deren Herstellung.**

(57) Die Erfindung betrifft ein neues Mottenschutzmittel bestehend aus einem Trägermaterial
und einem oder mehreren insektiziden Wirkstoffen,
bei dem das Trägermaterial wirkstofffreie und wirkstoffhaltige Zonen aufweist, wobei diese Auftrennung
in wirkstofffreie und wirkstoffhaltige Zonen mittels
drucktechnischer Verfahren erzeugt wird.

EP 0 215 225 A2

## Mottenschutzmittel und Verfahren zu deren Herstellung

Die Erfindung betrifft Mottenschutzmittel zur Bekämpfung von Textilschädlingen, sowie Verfahren zur Herstellung dieser Mottenschutzmittel.

Mottenschutzmittel, bestehend aus einem Trägermaterial und auf dieses Trägermaterial aufgebrachte insektizide Wirkstoffe werden zur Bekämpfung verschiedener Entwicklungsstadien von Textilschädlingen eingesetzt. Die wichtigsten Textilschädlinge sind die Kleidermotte, die Pelzmotte, der Speckkäfer und der Pelzkäfer.

Mottenschutzpapiere sind die am weitesten verbreiteten Mottenschutzmittel. Dies sind teilbare längliche Streifen, die in Kleiderschränke eingehängt oder aber als einzelne Blätter in Schubladen eingelegt werden. Der vom Träger (hier Papier) abdampfende insektizide Wirkstoff dient zur Bekämpfung der Textilschädlinge.

Nach 6 bis 12 Monaten ist die Wirkung soweit abgeklungen, daß das Mottenschutzpapier erneuert werden muß.

Mottenschutzpapiere werden nach zwei verschiedenen großtechnischen Verfahren hergestellt:

Beim Imprägnierverfahren wird eine Bahn saugfähigen Papiers von einer Rolle abgewickelt, durch ein Wirkstoffbad geführt, und in einem Trockentunnel getrocknet. Das so imprägnierte Rohpapier wird anschließend zu gebrauchsfähigen Stücken konfektioniert.

Beim Streichverfahren ist der Wirkstoff in die wäßrige Paste eines Dispersionsfarbstoffs eingearbeitet. Die so erhaltene Wirkstoffpaste wird auf von Rollen abgewickelte Trägerpapierbahnen ein-oder zweiseitig aufgestrichen, im Trockentunnel getrocknet, wieder aufgerollt und danach erneut abgerollt und zu gebrauchsfähigen Stücken konfektioniert.

Die nach den beiden beschriebenen Verfahren hergestellten Mottenschutzmittel haben Nachteile beim Herstellungsverfahren und bei der Anwendung.

Die nach dem Imprägnier-oder Streichverfahren hergestellten wirkstoffhaltigen Papierbahnen müssen zu anwendungsfertigen Papierstreifen geschnitten werden (z.B. zu "Leporellos"). Dabei entsteht ein erheblicher Verschnitt an insektizidhaltigem Mottenschutzpapier.

Bei beiden Verfahren wird im Verhaltnis zum eingesetzten Wirkstoff viel Lösungsmittel bzw. Verdünnungsmittel verwendet, so daß nach dem Auftragen des Wirkstofs die Papierbahnen bei erhöhter Temperatur getrocknet werden müssen. Dabei verdampft neben dem Lösungsmittel auch ein erheblicher Teil des Wirkstoffs, da vom Anwendungsprinzip her der Wirkstoff leicht verdampfbar sein muß.

Darüber hinaus kristallisieren zahlreiche Wirkstoffe beim Trocknen aus. Diese kristallinen Bereiche verändern die Wirkstofffreigabe.

Der Wirkstoffverlust durch Trocknung und Verschnitt beträgt etwa 15 -25 %. Die Rückgewinnung des Wirkstoffs ist in vielen Fällen nicht möglich, so daß insektizidhaltiger Abfall bzw. insektizidhaltige Abluft anfällt.

Die Auswahl an insektiziden Wirkstoffen wird außerdem dadurch begrenzt, daß zahlreiche Substanzen bei der zur Trocknung notwendigen Wärmebehandlung zusammensintern oder nicht thermostabil sind. Des weiteren wird dadurch die Abgaberate der Wirkstoffe und die Dauerwirkung nachteilig beeinflußt. Die nach dem Trocknen zunächst wieder aufgerollten Papierbahnen verkleben und reißen bei der Weiterverarbeitung.

Bei Mottenschutzpapieren, die nach dem derzeit allgemein angewendeten Streichverfahren hergestellt werden, können flüssige oder ölige Wirkstoffe nur schwer in die wäßrige Suspension der Streichpaste eingearbeitet werden.

Weil bei den nach dem Imprägnier-bzw. Streichverfahren hergestellten Mottenschutzpapieren der Wirkstoff auf der gesamten Fläche des Trägerpapiers gleichmäßig verteilt ist kann, bei einer vorgegebenen Gesamtfläche eines Streifens Mottenschutzpapier, die pro Flächeneinheit aufgetragene Wirkstoffmenge nicht frei gewählt werden. Des weiteren kann der Anwender nicht beurteilen, ob der insektizide Wirkstoff vom Mottenschutzpapier abdiffundiert ist und das Mottenschutzpapier gegebenenfalls erneuert werden muß.

Ausgabe der Erfindung ist es, ein Mottenschutzmittel sowie ein Verfahren zur Herstellung vorzuschlagen, bei dem die beschriebenen Nachteile bei Herstellung, Anwendung und Anwendungsbreite vermieden werden.

Diese wird erfindungsgemäß gelöst durch ein Mottenschutzmittel, bestehend aus einem Trägermaterial und einem oder mehreren insektiziden Wirkstoffen, dadurch gekennzeichnet, daß das Trägermaterial wirkstoffhaltige und wirkstofffreie Zonen aufweist.

Als insektizide Wirkstoffe können grundsätzlich alle Wirkstoffe verwendet werden, die bei Raumtemperatur einen hinreichend großen Dampfdruck besitzen und somit in geschlossenen Räumen (d.h. unter den für Mottenschutzpapieren üblichen Anwendungsbedingungen) zur Bekämpfung von Textilschädlichen ausreichende Konzentration erreichen.

Hervorzuheben sind die nachstehend angegebenen Wirkstoffe, die allein oder in Kombination mit anderen Wirkstoffen eingesetzt werden können:
. Chlorierte Kohlenwasserstoffe, wie

Lindan, Methoxychlor
Phosphorsäure-Ester, wie

Chlorpyrifos, Chlorpyrifos-Methyl, Dichlorvos
Pyrethroide, wie

Vaporthrin (Emphenthrin), Permethrin, Bioresmethrin, Bioallethrin, Kadethrin, Decis, Cyfluthrin, Fenfluthrin
Bevorzugt werden folgende Wirkstoffmengen eingesetzt:

Aus der Gruppe

Chlorierte Kohlenwasserstoffe: 5 -15g / m²

Phosphorsäure-Ester: 5 -10g / m²

Pyrethroide: 0,2 -5g / m²
Die Wirkstoffe können allein oder in Kombination mit anderen Wirkstoffen eingesetzt werden.

Dadurch kann sich die angegebene Aufwandmenge entsprechend verändern.
Als Trägermaterial kann verwendet werden:

Papier, Pappe, Karton, Kunststoffolien, textile Materialien, Vliesstoffe
Das Aufbringen des Wirkstoffs auf das Trägermaterial erfolgt zweckmäßigerweise mittels einer drucktechnischen Methode.
Der Begriff "drucktechnische Methoden" umfaßt erfindungsgemäß alle Verfahren mit denen der Wirkstoff in Form eines Flächenmusters auf das Trägermaterial aufgebracht werden kann.
Es eignen sich im Prinzip sämtliche Druckverfahren, wie etwa das Siebdruckverfahren, das Flexodruckverfahren, das Tiefdruckverfahren oder berührungslose Druckverfahren, wie das Ink-Jetting-Verfahren.
Das Flächenmuster des Wirkstoffs auf dem Trägermaterial kann auch mittels geeigneter Spritzdüsen aufgebracht werden, wobei durch ein Pulsen und/oder Ablenken des Strahles die erfindungsgemäßen wirkstoffhaltigen und wirkstofffreien Bereiche auf dem Trägermaterial erzeugt werden.
Die Erfindung umfaßt somit auch Verfahren zur Herstellung von Mottenschutzmitteln durch drucktechnische Methoden.

Die Wahl des geeigneten Druckverfahrens ist abhängig von der Beschaffenheit des Trägermaterials. Bei der Verwendung von Papier, Pappe, Karton oder Kunststoffolie ist das Tiefdruckverfahren und bei der Verwendung von textilen Stoffen und von Vliesstoffen das Siebdruckverfahren bevorzugt.
Die Wirkstoffe können mit geeigneten Lösungsmiteln zu Pasten, Suspensionen oder Lösungen verdünnt aufgetragen werden oder, sofern sie als Flüssigkeit oder Paste vorliegen auch unverdünnt eingesetzt werden.
Durch die Anwendung von erfindungsgemäßen Verfahren ist es möglich mit geringsten Lösungsmittelmengen auszukommen, so daß das bedruckte Trägermaterial nicht einer gesonderten Wärmebehandlung unterzogen werden muß.

Dies ist im Gegensatz zu den bisher angewendeten Verfahren zur Herstellung von Mottenschutzpapieren von entscheidender Bedeutung. Bei der Imprägniermethode und beim Streichverfahren muß immer soviel Lösungsmittel verwendet werden, um das Trägermaterial über seine gesamte fläche vollständig zu tränken oder zu beschichten. Bei beiden Verfahren muß das Lösungsmittel durch nachträgliches Trocknen entfernt werden.
Da der Trocknungsschritt bei dem erfindungsgemäßen Verfahren entfällt, treten auch die damit verbundenen Wirkstoffverluste oder Beeinträchtigungen der Wirkstoffqualität nicht auf.

Die durch die erfindungsgemäßen Verfahren herstellbare Auftrennung des Mottenschutzmittels in wirkstoffhaltige und wirkstofffreie Zonen hat mehrere Vorteile:
Wirkstoffhaltige-und wirkstofffreie Zonen werden auf dem Trägermaterial so angeordnet, daß der beim Konfektionieren anfallende Verschnitt wirkstofffrei ist. Der Verschnitt kann somit ohne besondere Vorsichtsmaßnahmen als Altmaterial weiterverarbeitet werden.
Es können räumlich getrennt verschiedene, auch chemisch nicht miteinander verträgliche, Wirkstoffe oder Hilfsstoffe aufgedruckt werden.
Die wirkstoffhaltigen Flächen des Trägermaterials heben sich vom Untergrund des wirkstofffreien Trägermaterials durch eine Farbänderung (meist eine Farbvertiefung um etwa 2 Farbtöne) hervor. Das Nachlassen der insektiziden Wirkung des Mottenschutzpapiers wird durch das Verschwindendieser Farbänderung angezeigt.
Durch das Aufdrucken bestimmter Flächen, die den Wirkstoff -in gegebenenfalls erhöhter Flächenkonzentration -und/oder einen anderen ein Verdampfungsverhalten dem Wirkstoff entsprechenden Hilfsstoff enthalten, können Testflächen hergestellt werden, deren Änderung im Farbton im Vergleich zu einer unbedruckten Fläche dem Anwender das Nachlassen der insektiziden Wirkung anzeigen.

Ein weiterer Vorteil des erfindungsgemäßen Verfahrens besteht in der genauen Dosiermöglichkeit der insektiziden Wirkstoffe mittels exakt gravierter, bzw. geätzter Druckwalzen oder Druckplatten. Dadurch können auch kleine Mengen moderner, hochwirksamer Insektizide wirtschaftlich eingesetzt werden.

Die Gesamtmenge der im Mottenschutzmittel pro Flächeneinheit aufgetragenen Wirkstoffe kann durch verschiedene Variable gesteuert werden:

-Druch das Verhältnis von wirkstofffreier zu wirkstoffhaltiger Fläche

-Durch die pro Flächeneinheit auf die wirkstoffhaltige Fläche aufgetragene Wirkstoffmenge (steuerbar durch die Konzentration der Wirkstofflösung; bei Druckverfahren: durch Abänderung der Ätztiefe der Druckwalze bzw. Druckplatte; bei Sprühverfahren: durch die Dauer des Sprühpulses je Flächeneinheit etc.)

Eine Erhöhung der pro wirkstoffhaltiger Flächeneinheit aufgetragenen Wirkstoffmenge führt, wie in Beispiel 3 angegeben, zu einer Verbesserung der Dauerwirkung.

Des weiteren kann die Dauerwirkung des mit Insektizid bedruckten Mottenschutzmittels durch Beschichtung mit einem Kunststoffilm nach an sich bekannten Methoden verbessert werden.

Die erfindungsgemäße Aufteilung des Mottenschutzmittels in wirkstofffreie und wirkstoffhaltige Zonen betrifft somit sowohl das noch nicht konfektionierte insektizidhaltige Trägermaterial, wie auch das fertige Endprodukt.

Beide vorteilhafte Effekte können unabhängig voneinander genutzt werden.

Die mittels drucktechnischer Verfahren erzielbare Auftrennung in insektizidhaltige und insektizidfreie Zonen wird naturgemäß bei der Lagerung des Mottenschutzmittels durch Diffusionsvorgänge nivelliert, so daß die Grenze zwischen insektizidhaltiger und insektizidfreier Zone einem mehr oder weniger steil abfallenden Konzentrationsgradienten entspricht.

Im folgenden soll die Erfindung beispielhaft beschrieben werden, ohne den Umfang des erfindungsgemäßen Gedankens dadurch einzuschränken.

In den Beispielen 1 und 2 werden die Verfahrensparameter zum Bedrucken eines Trägerpapiers eines bestimmten Flächengewichts mit zwei ververschiedenen insektiziden Wirkstoffen angegeben.

Beispiel 3 belegt die Verbesserung der Dauerwirkung durch Variation der pro Flächeneinheit aufgetragenen Wirkstoffmenge.

Beispiel 1

Flüssiger insektizider Wirkstoff (Vaporthrin)

Trägermaterial : Spezial Druckpapier 100g / m²

Druckauftrag : Wirkstoff (Vaporthrin) 2,5g / m²

Druckauftrag : Farbe 2,0g / m²

Druckauftrag : Geruchsstoff 0,5g / m²

Tiefdruckanlage mit geätzter Spezialwalze (Raster 100, Ätztiefe 30 my).

Beispiel 2

Fester insektizider Wirkstoff (Chlorpyriphos)

Trägermaterial : Spezial Druckpapier 100g / m²

Druckauftrag : Wirkstoff (50 Gew. %ige Lösung von Chlorpyriphos in Essigester 12g / m²

Druckauftrag : Farbe 2g / m²

Druckauftrag : Gerauchsstoff 1g / m²

Tiefdruckanlage mit geätzter Spezialwalze (Raster 50, Ätztiefe 50 my).

Beispiel 3

Verbesserung der Dauerwirkung durch Erhöhung der Wirkstoffmenge/Flächeneinheit.

400 mg Vaporthrin werden je auf ein 100 und 50 cm² großes Papierstück aufgetragen und bei Raumtemperatur frei aufgehängt. Die abgegebene Wirkstoffmenge wird in Intervallen von 10 Tagen durch Auswiegen bestimmt.

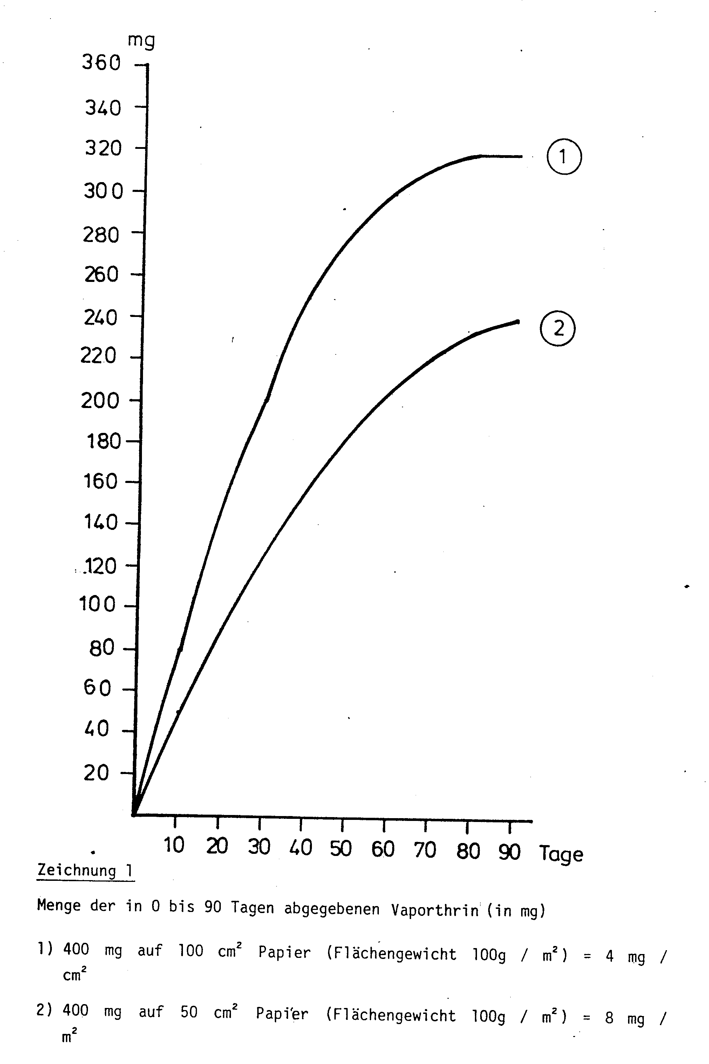

**Ansprüche**

1) Mottenschutzmittel, bestehend aus einem Trägermaterial und einem oder mehreren insektiziden Wirkstoffen, dadurch gekennzeichnet, daß das Trägermaterial wirkstofffreie und wirkstoffhaltige Zonen aufweist.

2) Mottenschutzmittel nach Anspruch 1,

dadurch gekennzeichnet, daß die Auftrennung in wirkstofffreie und wirkstoffhaltige Zonen mittels drucktechnischer Verfahren erzeugt wird.

3) Mottenschutzmittel nach Anspruch 1,2,

dadurch gekennzeichnet, daß das Trägermaterial aus Papier besteht.

4) Mottenschutzmittel nach Anspruch 1,2,

dadurch gekennzeichnet, daß das Trägermaterial aus Kunststoffolie, textilem Material, Pappe, Karton oder Vliesstoff besteht.

5) Mottenschutzmittel nach Anspruch 1 bis 4

dadurch gekennzeichnet, daß es als insektizide Wirkstoffe einen oder mehrere der nachstehend angegebenen Stoffe enthält.

Lindan, Methoxychlor, Chlorpyrifos, Chlorpyrifos-Methyl, Dichlorvos, Vaporthrin, Permethrin, Bioresmethrin, Bioallethrin, Kadethrin, Decis, Cyfluthrin, Fenfluthrin.

6) Mottenschutzmittel nach Anspruch 1 bis 5

dadurch gekennzeichnet, daß das insektizidhaltige Trägermaterial zur Verlängerung der Wirkdauer mit Kunststoff überzogen ist.

7) Zwischenprodukt zur Herstellung von

Mottenschutzmitteln nach Anspruch 1 bis 6,

dadurch gekennzeichnet, daß das noch nicht konfektionierte insektizidhaltige Trägermaterial auf den Flächen, die bei der Konfektionierung als Verschnitt anfallen wirkstofffrei ist.

8) Verfahren zur Herstellung von Mottenschutzmitteln bestehend aus einem Trägermaterial und einem oder mehreren insektiziden Wirkstoffen, dadurch gekennzeichnet, daß eine den insektiziden Wirkstoff enthaltende Flüssigkeit, Paste oder Suspension mittels drucktechnischer Verfahren auf das Trägermaterial aufgebracht wird.

9) Verfahren zur Herstellung von Mottenschutzmitteln nach Anspruch 8, dadurch gekennzeichnet, daß auf die Bereiche des Trägermaterials, die bei der Konfektionierung als Verschnitt anfallen, kein Wirkstoff aufgetragen wird.

10) Verfahren nach Anspruch 8,9

dadurch gekennzeichnet, daß als Trägermaterial Papier verwendet wird.

11) Verfahren nach Anspruch 8,9

dadurch gekennzeichnet, daß als Trägermaterial Kunststofffolien, textiles Material, Pappe, Karton oder Vliesstoff verwendet wird.

12) Verfahren nach Anspruch 8 bis 11,

dadurch gekennzeichnet, daß als insektizider Wirkstoff einer oder mehrere der nachfolgend angegebenen Wirkstoffe verwendet werden:

Lindan, Methoxychlor, Chlorpyrifos, Chlorpyrifos-Methyl, Dichlorvos, Vaporthrin, Permethrin, Bioresmethrin, Bioallethrin, Kadethrin, Decis, Cyfluthrin, Fenfluthrin.

Zeichnung 1

Menge der in 0 bis 90 Tagen abgegebenen Vaporthrin (in mg)

1) 400 mg auf 100 cm² Papier (Flächengewicht 100g / m²) = 4 mg / cm²

2) 400 mg auf 50 cm² Papier (Flächengewicht 100g / m²) = 8 mg / m²